# EUROPEAN PATENT APPLICATION

(11) **EP 2 017 521 A2**
(43) Date of publication of application: **21.01.2009**
(21) Application number: 08425153.7
(22) Date of filing: 12.03.2008
(51) Int. Cl.: F16L 55/18, B23K 37/00

(54) **Safe welding system for interventions of installation, repair, maintenance on gas methane supply piping**

(30) Priority: 20.07.2007 IT AR20070039
(71) Applicant: Odori, Mauro, 52020 Castelfranco di Sopra (AR) (IT); Odori, Enrico, 52020 Castelfranco di Sopra (AR) (IT)
(72) Inventor: Odori, Mauro, 52020 Castelfranco di Sopra (AR) (IT); Odori, Enrico, 52020 Castelfranco di Sopra (AR) (IT)

(57) **Abstract**

SAFE WELDING SYSTEM is a device destined to increase safety working conditions for intervention of Installation, repair, maintenance on gas methane supply pipings. The problem to solve is the management of methane leakages through plugging (made by proper plugging machine available on the market) inside the pipes: leakages can create in the intervention area (where pipe cutting and welding is performed) explosive mixtures in air. The danger of ignition and explosion of these mixtures by means of welding electric arc is evident. These potentially explosive mixtures are made inert injecting nitrogen in the intervention area.

SAFE WELDING SYSTEM operates an analysis of %VOL methane inside the pipe between the plug and the intervention point by means of a specific methane measuring device. The electrical signal of the measurement done (proportional to the value of %VOL) is sent to the Electronic Rack: according to the signal received, the electronic rack regulates, continuously, the opening of the proportional electric valve mounted on Nitrogen Header: in this way the quantity of nitrogen injected in the intervention area is proportional to the methane leakage and of such an entity to make inert the mixture air-methane. In this way, welding operations can be performed in safe working conditions (see Dwg. 1).

In common operating, by now, quantitative and continuous measurements of methane leakages through pluggings are not performed: the determination of the right nitrogen quantity to inject inside the pipe depends on the operators skill and experience, with an evident hazard of undervaluing (inadequate nitrogen injection in potentially explosive conditions) or overvaluing (too large nitrogen injection can prematurely exhaust nitrogen stored by the working yard) the problem.

## Description

SAFE WELDING SYSTEM is a safety device against fire and explosion dangers In intervention of installation, repair and maintenance on gas methane supply piping. These dangers rise from methane leakages through the pluggings made (by means of plugging machines available on the market) inside the piping object of intervention: leakages are caused by imperfect adhesion of the plug to piping wall, due to the presence of welding seam or to imperfect circle sectional area of the pipe.

Methane leakages (having generally variable and unpredictable entity) can produce, between the plugging and the intervention area, hazardous air-methane explosive mixtures in condition of possible priming due to pipe welding operations.

To face dangers caused by explosive air-methane mixtures, gas nitrogen is added inside the piping to make the gas mixture inert in the intervention area.

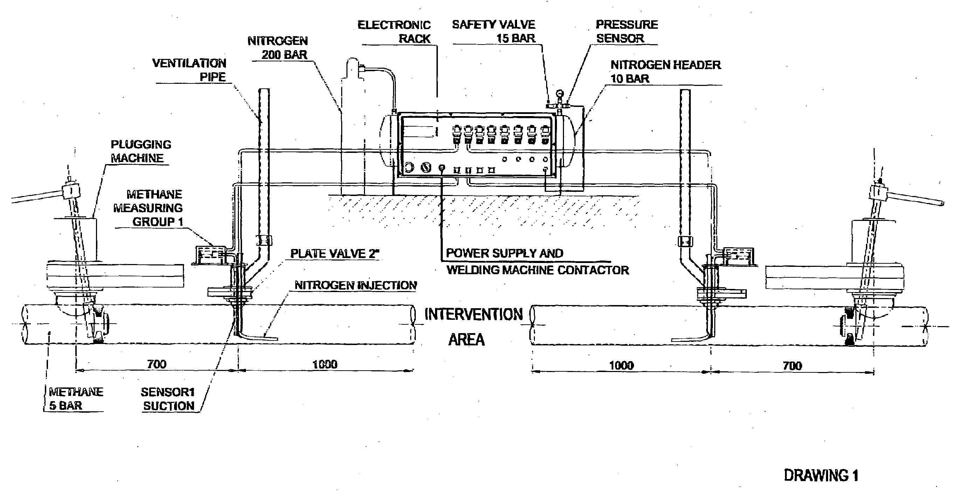

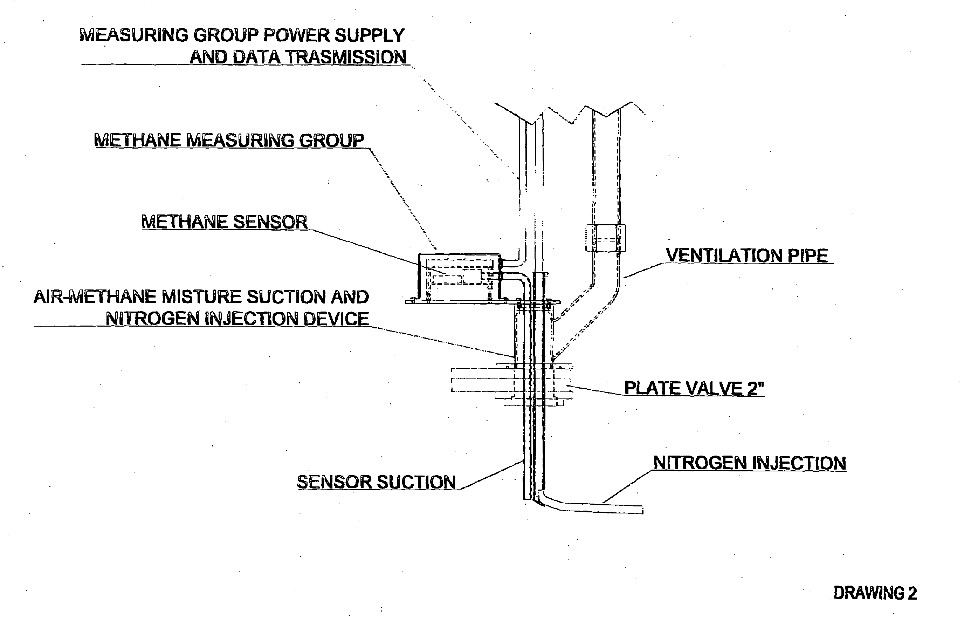

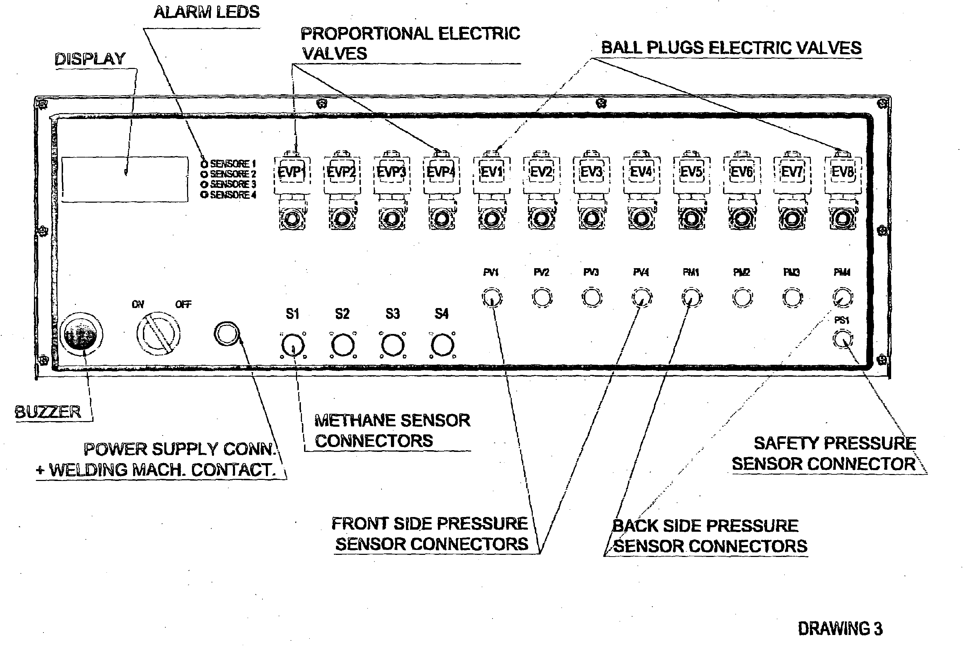

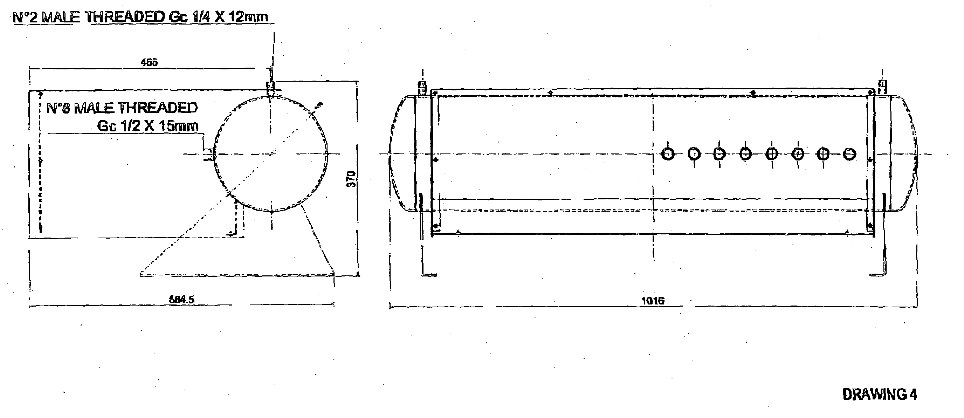

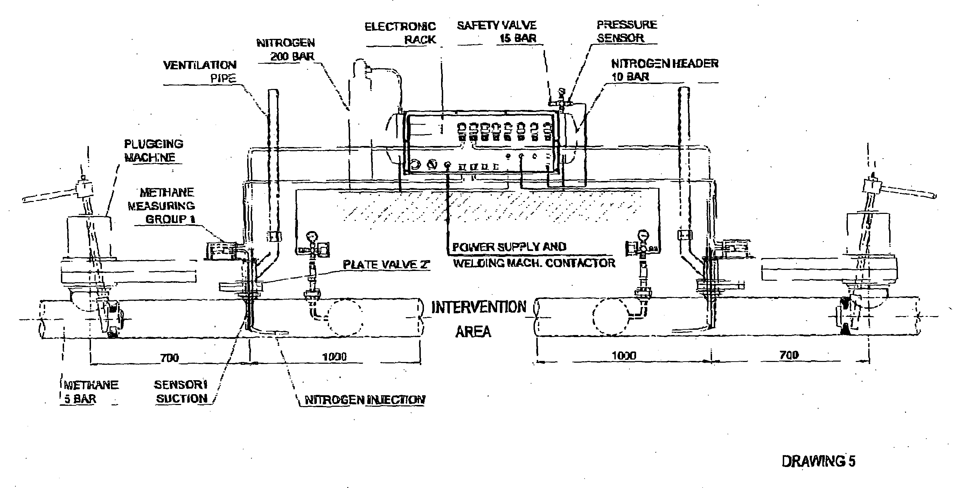

### SAFE WELDING SYSTEM (Drawing 1)

The device is composed by the following parts:
1. Methane measuring group (up to 4 pieces for device - Dwg. 2): operates the measure of %VOL methane in the pipe by means of a specific methane sensor. In output it sends an electrical serial RS232 signal proportional to the measured %VOL. Sensor is assembled in a proper rack mounted on the air-methane mixture suction and nitrogen injection device. This device (supplied with a ventilation pipe following the body of rules) is connected, by means of a common plate valve, with the inside of the piping from which the mixture to be analyzed is collected by a suction pipe. The device allows also nitrogen injection by means of a flexible pipe driven inside e metal guide. Several releases will be implemented to fix the assembly of the device on pipes of diameters from DN 2" up to ON 12".
2. Electronic rack (n°1 piece for device - Dwg.3): receives from the measuring group the electrical signal proportional to %VOL methane and actuates the proportional electric valve (up to 4 pieces for device) the regulates the inlet of nitrogen so that to grant that the mixture air-methane is inert. Before starting operations, the electronic rack operates automatically a check control of all the sub-devices (methane sensors, empty nitrogen header pressure sensor).
3. Nitrogen Header (n°1 piece for device - Dwg. 4): is a tank filled with nitrogen at 10 bar directly fed by a 200 bar nitrogen bottle. By means of a pressure sensor and a safety valve, the pressure inside the header can range only 3 bar - 10 bar to grant enough nitrogen inside the pipe. For pressure lower then 3 bar, the electronic rack sends an acoustic alert for changing nitrogen bottle. On the header are mounted the proportional electric valves that regulate nitrogen inlet in the intervention area.
4. Additional safety device (Dwg. 5): in order to face the eventuality of torsion of the plug and inlet of a 5 bar methane stream in the intervention area, it is possible to insert two ball plugs (one on each side of the intervention) inflated 1,5 - 2 bar with nitrogen downstream nitrogen inlet. The Incidental 5 bar methane shock-wave would burst the ball plug: the intervention area would be immediately flooded by the ball plug inflating nitrogen and, by means of the signal sent by the inflating pressure sensor to the electronic rack, by an high pressure nitrogen flow. In the same time, the ball inflating pressure sensor, through the electronic rack, would excite a relais able to break the electrical supply of the welding machine.

### OPERATION

After making the plugging on both sides of the intervention area and mounting the plate valves, removed methane from the piping and cut the piece of pipe to be removed, the measuring groups and the electronic rack are activated. After sensors warm-up time (shorter than 1 min.) the device starts its service by sending nitrogen inside the intervention area according to %VOL methane measured by sensors in order to keep the %VOL not higher than 2%. It the leakage is so large to give measurements higher than 3%VOL the electronic rack, by the dedicated relais, breaks down the electrical supply of the welding machine till the value of measurements isn't lower than 3%VOL (this value is to be considered an absolutely safety one, as the Lower Explosive Limit (LEL) of methane in air is 5%VOL). The measure of %VOL methane and the nitrogen injection are performed continuously during the intervention so that possible increases or decreases of methane leakage can be managed keeping safe working conditions. The electronic rack is able to manage separately signals coming from the two (or four, when intervention is on a piping cross) measure groups and to operate different entity nitrogen injections according to different leakages in the two sides of intervention area.

When intervention is finished, the nitrogen flow is stopped by the rack, mixture suction and nitrogen injection pipes are recuperated, residual nitrogen is removed from the pipe, plate valves are closed and it's possible to go on with the usual activities (check of weldings, removal of pluggings, etc.).

## Claims

1. SAFE WELDING SYSTEM operates a quantitative analysis of the entity of leakage and, as a consequence, regulates nitrogen injection with the right quantity (with a suitable safety margin) to assure that atmosphere inside the intervention area is inert: all this happens automatical, without any action to be made by the operators. At the moment in this kind of intervention such analysis is not performed and the entity of nitrogen injection is managed by the operators; the safety of operators involved in the intervention is therefore depending only on operators' skill and experience.

2. SAFE WELDING SYSTEM operates automatically and continuously all over the intervention measuring %VOL methane and regulating nitrogen injection assuring safe working conditions with variable leakages. To further increase safety condition, SWS can forbid the operation of the welding machine (main source of fire priming) with leakages so large to make impossible a safe working condition.

3. The additional safety device with ball plugs can provide an emergency intervention to avoid the potentially devastating effects of the plug torque: it seems that, by now, doesn't exist any device able to face this event.
